Europäisches Patentamt

European Patent Office

Office européen des brevets

(19)

(11) EP 0 735 786 A2

(12) EUROPÄISCHE PATENTANMELDUNG

(43) Veröffentlichungstag:
02.10.1996 Patentblatt 1996/40

(51) Int. Cl.⁶: **H04Q 3/66**, H04M 3/36,
H04Q 3/545

(21) Anmeldenummer: 96103411.3

(22) Anmeldetag: 05.03.1996

(84) Benannte Vertragsstaaten:
DE FR GB SE

(30) Priorität: 31.03.1995 DE 19512168

(71) Anmelder: SIEMENS AKTIENGESELLSCHAFT
80333 München (DE)

(72) Erfinder:
• Tsolas, Nicholas, Dr.-Ing.
152 35 Vrilissia, Athens (GR)
• Kesting, Volker, Dr.rer.nat.
81476 München (DE)

(54) **Verfahren zur Überlastabwehr in einem Kommunikationsnetz**

(57) Verfahren zur Überlastabwehr für einen zentralen Service-Knoten eines Netzes werden von dem zentralen Service-Knoten selbst gesteuert und in den peripheren Knoten durchgeführt. Die Erfindung stellt ein Berechnungsverfahren zur Verfügung, durch das die Steuerung dieser Überlastabwehr optimiert wird.

EP 0 735 786 A2

Printed by Rank Xerox (UK) Business Services
2.13.6/3.4

**Beschreibung**

Die Erfindung betrifft ein verfahren zur Überlastkontrolle in einem Kommunikationsnetz, das mindestens einen zentralen Knoten (Knoten für spezielle Dienste) und mindestens einen peripheren Knoten (Knoten, die die speziellen Dienste des zentralen Knotens nicht bieten, z.B. Netzzugangsknoten) aufweist, wobei ein Teil der über die peripheren Knoten an das Netz herangetragenen Aufträge nur von einem zentralen Knoten bearbeitet werden kann.

Ein zentraler Knoten muß nun vor einer zu großen Zahl von Aufträgen geschützt werden, da andernfalls Warteschlangenüberlauf und Nachrichtenverlust droht. Wie dieser Schutzmechanismus aussehen kann, wird im folgenden am Beispiel eines intelligenten Netzes beschrieben.

Ein intelligentes Netz(kurz IN) umfaßt mehrere Service Switching Points (kurz SSP), die direkt oder über ein Signalisierungsnetz wie beispielsweise das Signalisierungsnetz CCS7 mit einem oder mehreren Service Control Points (kurz SCP) verbunden sind. Die Service Control Points sind Datenbasen, die die Service Logik und Customer Records enthalten.

Ein Auftrag zu einem Service des intelligenten Netzes (im folgenden kurz IN-Service genannt) wird in der Zugangs-Vermittlungsstelle durch einen sog. Service Code, der für diesen Service spezifisch ist, identifiziert und zunächst zu einem Service Switching Point SSP geroutet. Anhand der gewählten Nummer und/oder des Service Codes bestimmt der Service Switching Point, welcher Service Control Point SCP die diesem Service entsprechenden Customerdaten hat, und sendet anschließend zu diesem Service Control Point eine Nachricht, mit der der Service Switching Point um Anweisungen bittet, wie er den Auftrag zu behandeln hat. Nachdem der SCP die Customerdaten untersucht hat, sendet er eine Antwort zum Service Switching Point, die alle Informationen beinhaltet, die dieser zur Behandlung des Auftrags benötigt.

Unter Umständen kann der Service Switching Point den Service Control Point für denselben Auftrag ein weiteres Mal anrufen, nämlich beispielsweise dann, wenn es bei der Durchführung des Auftrags keine Antwort gab oder die Destinationnummer belegt war. Wenn der Auftrag schließlich beendet worden ist, benachrichtigt der Service Switching Point den Service Control Point für die Gebührenabrechnung (Billing).

Die obige vereinfachte Beschreibung der Abläufe bei einem Auftrag über das intelligente Netz zeigt, daß der Service Control Point der zentrale Netzknoten in einer im intelligenten Netz ist, der jeden Auftrag steuert und deshalb in hohem Maße die Leistungsfähigkeit eines intelligenten Netzes beeinflußt.

Wenn die Zahl der Anforderungen an den Service Control Point dessen Verarbeitungskapazität überschreitet, dann befindet sich der Service Control Point in einem Überlastzustand. In solchen Fallen erfahren die Teilnehmer (Subscriber) des intelligenten Netzes lange Verzögerungen. Viele Teilnehmer brechen ihre Versuche deshalb ab, wählen erneut (Feedback), andere wiederum warten, ohne daß ihre Aufträge zum Erfolg führen, da die erste Nachricht zum Service Control Point, beispielsweise durch einen Overflow der Eingangswarteschlange des Service Control Points, verloren geht. Als Folge dieses Teilnehmerverhaltens wird der Service Control Point die meiste Zeit dafür aufbringen, Nachrichten von Aufträgen zu verarbeiten, die bereits abgebrochen wurden.

Eine mögliche Lösung des Problems besteht darin, den Service Control Point jeden zusätzlichen Auftrag (Call) über einer vorgegebenen Eingangswarteschlangenschwelle abweisen zu lassen. Diese Lösung könnte jedoch einem Verschwenden von Processingzeit des Service Control Points gleichkommen. Der Overhead, der durch die Entscheidung darüber, welche Nachricht abgewiesen wird, entsteht, könnte nämlich beträchtlich sein.

Eine Lösung dieses Problems bietet ein Verfahren, das im folgenden auch als Automatisches Call Gapping, kurz ACG, bezeichnet wird. Bei diesem Verfahren werden neue Aufträge (Calls) bereits in den Service Switching Points blokkiert, d.h. also bevor sie den Service Control Point erreichen. Auf diese Weise wird erreicht, daß die Ressourcen eines Service Control Points nicht verschwendet werden und bei solchen Aufträgen, die nicht blockiert werden, gewährleistet ist, daß sie auch zu Ende geführt werden. Da die Service Switching Points nicht miteinander kommunizieren, wissen sie nicht, wieviel Verkehr von ihnen insgesamt zum Service Control Point gesandt wird und damit auch nicht, ob sich der Service Control Point in einem Überlastzustand befindet. Deshalb wird die Entscheidung, ob der Verkehr in Richtung Service Control Point gedrosselt werden muß oder nicht und auf welche Weise er gedrosselt werden muß, durch den Service Control Point durchgeführt, der als einziger Netzknoten seine Überlastsituation genau kennt.

Der SCP reduziert den Verkehr, indem er eine untere Grenze setzt, das sog. Gapintervall, unterhalb dessen kein weiterer Auftrag vom Service Switching Point an den betreffenden Service Control Point gesendet werden darf. Wenn ein Auftrag von einem Service Switching Point angenommen wird und zum Service Control Point gesandt wird, werden also alle darauffolgenden neuen Aufträge, die innerhalb des Gapintervalls beim Service Switching Point ankommen, blockiert und ausgelöst, ohne daß eine Nachricht zum Service Control Point gesandt wird. Der erste Auftrag, der nach Ablauf dieses Zeitintervalls am Service Switching Point eintrifft, wird dann wieder angenommen, und es wird erneut ein Timer für das genannte Zeitintervall (Gapintervall) gestartet. Dieser Blockier- oder Gapmechanismus wird für die Dauer eines Zeitintervalls der Länge D angewandt, das auch Dauerintervall genannt wird, nach dessen Ablauf alle Aufträge wieder angenommen werden. Die Dauer des genannten Intervalls D wird durch den Service Control Point festgelegt.

In einem intelligenten Netz mit vielen verschiedenen Diensten (Services), ist es aus Gründen der Fairness und Flexibilität notwendig, Anrufe diensteselektiv zu blockieren. Bei Diensten wie beispielsweise dem Mass Calling, bei dem eine IN-Nummer die meisten der Anrufe erhält, wird das ACG-Verfahren nur auf solche Aufträge angewendet, die unter dieser IN-Nummer einen Dienst anfordern. Wenn es gleichzeitig eine weitere ACG-Kontrolle für den Dienst gibt, dem diese Nummer angehört, z.B. der Dienst "Freephone", dann wird ein Auftrag mit dieser Nummer zwei ACG-Kontrollverfahren unterzogen. Im allgemeinen kann ein Auftrag also mehreren ACG-Kontrollverfahren unterzogen werden, je nachdem welche Arten von Selektivität erwünscht sind. Die Art bzw. der Typ der Selektivität wird im folgenden als Selektivitätstyp bezeichnet. Durch den Selektivitätstyp wird also der Typ des Verkehrs festgelegt, der dem ACG-Kontrollverfahren unterliegt. Ein ACG-Kontrollverfahren kann beispielsweise angewendet werden auf den Verkehr unter einer bestimmten IN-Nummer, auf eine Gruppe von Nummern, auf einen Service, auf eine Gruppe von Services oder auf alle Services. Zu bemerken ist, daß bei einigen dieser "Verkehrslevels" mehr als eine ACG-Kontrolle, jedoch von unterschiedlichem Selektivitätstyp, zur gleichen Zeit aktiv sein kann. Beispielsweise können zwei verschiedene IN-Nummern unabhängig voneinander gleichzeitig einer ACG-Kontrolle unterzogen werden. Die Typen der zu den beiden IN-Nummern gehörigen ACG-Kontrollverfahren sind also verschieden, da der Selektivitätstyp auf der IN-Nummer basiert.

Wenn der Service Control Point einen Überlastzustand oder irgendeine andere abnormale Situation detektiert und daraufhin entscheidet, daß der ankommende Verkehr gedrosselt werden soll, sendet er eine spezielle Nachricht, die im folgenden als ACG-Nachricht bezeichnet wird, an alle Service Switching Points. Diese ACG-Nachricht enthält drei Parameter, nämlich ein Gapintervall G, einen Selektivitätstyp und ein Dauerintervall D, die einem Service Switching Point jeweils angeben, wie stark er den Verkehr drosseln soll, welchen Typ von Verkehr er drosseln soll und für wie lange. Ein Service Switching Point wird daraufhin den Verkehr auf diesen Parametern basierend drosseln, bis der Service Control Point ihm eine weitere ACG-Nachricht mit neuen Werten sendet oder der Timer, den er gemäß dem Dauerintervall D gesetzt hat, abläuft.

Im weiteren wird ein Ausführungsbeispiel des ACG-Verfahrens beschrieben, bei dem die Deaktivierung der ACG-Kontrolle unter der ausschließlichen Kontrolle des Service Control Points steht, d.h. also nicht auch von dem Parameterdauerintervall abhängt.

Der Service Control Point wird die in der ACG-Nachricht enthaltenen Parameter, die im folgenden auch als ACG-Parameter bezeichnet werden, periodisch (Regelintervall T) aufdatieren, so lange er sich in einer Überlastsituation befindet oder eine solche verläßt. Die ACG-Kontrolle eines Service Switching Points wird deaktiviert, wenn der Service Control Point eine ACG-Nachricht sendet, die für die Parameter "Gapintervall" und "Dauerintervall" die Werte Null beinhaltet. Das Regelintervall T ist konstant und beträgt beispielsweise 10 Sekunden.

Zur Ermittlung der Überlast zählt ein Service Control Point alle Aufträge, die er von den Service Switching Points empfängt. Darauf basierend berechnet der Service Control Point den neuen Wert des Gapparameters G für jede aktive ACG-Kontrolle, basierend auf der Auftrag-Ankunftsrate und der Kapazität bzw. des Durchsatzes (Call Processing Rate) des Service Control Points während des Regelintervalls mit der Länge T, das gerade beendet worden ist. Der neue Wert des Gapparameters wird daraufhin im Broadcastverfahren zu allen Service Switching Points gesandt, die ihn dann für das nächste Regelintervall verwenden. Falls ein Service Control Point weitere Überlastursachen detektiert und entscheidet, weitere ACG-Kontrollen zu aktivieren, werden für diese vom Service Control Point weitere Gapparameter berechnet und in gesonderten ACG-Nachrichten an diese Service Switching Points gesandt.

Ein Service Switching Point speichert alle die für die Durchführung der bei ihm momentan aktiven ACG-Kontrollen relevanten Daten, wie beispielsweise die Werte über die Gapintervalle, die Dauerintervalle und die Verkehrstypen (z.B. Calltypen). Wenn die bezüglich eines IN-Auftrags erste Nachricht einen Service Switching Point erreicht, überprüft dieser, ob es momentan aktive ACG-Kontrollen gibt, die auf diesen IN-Auftrag anzuwenden sind. Falls es für diesen Auftrag relevante aktive ACG-Kontrollen gibt, wird zunächst die speziellste ACG-Kontrolle durchgeführt, indem der zu dieser ACG-Kontrolle gehörige Gap-Timer überprüft wird. Ist der diesbezügliche Gap-Timer noch nicht abgelaufen, so wird der Auftrag blockiert, ohne daß irgendeine Nachricht bezüglich dieses Auftrags an einen Service Control Point gesandt wird. Falls im anderen Fall der Gap-Timer bereits abgelaufen ist, wird die nächst allgemeinere auf diesen Auftrag anwendbare ACG-Kontrolle bzw. genauer gesagt deren Gap-Timer überprüft. Falls alle auf diesen Auftrag anwendbaren aktiven ACG-Kontrollen nach der genannten Reihenfolge bzw. Hierarchie durchlaufen werden, ohne daß dabei der Auftrag aufgrund eines nicht abgelaufenen Gap-Timers blockiert wird, wird der Auftrag angenommen und die Gap-Timer jeder bezüglich dieses Auftrags anwendbaren ACG-Kontrolle werden erneut gestartet.

Zu den genannten hierarchischen ACG-Kontrollen erfolgt nunmehr ein Beispiel. Es sei angenommen, daß für einen Auftrag drei aktive ACG-Kontrollen anwendbar sind, d.h. es seien drei Gapintervalle $G_{11}$, $G_1$ und G vorgegeben, wobei G auf den ganzen Verkehr anzuwenden ist, d.h. auf alle Dienste, wobei das Gap-Intervall $G_1$ auf einen einzigen Dienst anzuwenden ist, z.B. "Free-Phone", und das Gap-Intervall $G_{11}$ auf eine einzige IN-Nummer eines "Free-Phone"-Dienstes anzuwenden ist. Wenn nun ein Auftrag zu der unter der ACG-Kontrolle stehenden IN-Nummer bei einem Service Switching Point ankommt, dann wird zunächst die speziellste ACG-Kontrolle durchgeführt, d.h., diejenige ACG-Kontrolle, die das Gap-Intervall $G_{11}$ beinhaltet. Falls der zu diesem Gap-Intervall gehörige Timer noch nicht abgelaufen ist, wird der Auftrag blockiert. Falls der Timer jedoch abgelaufen ist, wird die nächste, allgemeinere ACG-Kontrolle mit dem Gap-Intervall $G_1$ überprüft. Falls der Timer dieser ACG-Kontrolle noch läuft, wird der Auftrag blockiert. Falls er jedoch bereits abgelaufen ist, wird die letzte und allgemeinste ACG-Kontrolle mit dem Gap-Timer G durchgeführt. Falls dieser Timer noch läuft, wird der Auftrag blockiert. Falls er jedoch bereits abgelaufen ist, wird der Auftrag angenommen und die Timer der drei genannten Gap-Intervalle werden erneut gestartet.

Falls ein Auftrag zu einer anderen IN-Nummer, jedoch für denselben Service bei dem genannten Service Switching Point ankommt, dann wird zunächst die ACG-Kontrolle mit dem Gap-Intervall $G_1$ überprüft. Falls der diesbezügliche Timer noch läuft, wird der Auftrag blockiert. Falls der Timer bereits abgelaufen ist, wird die ACG-Kontrolle mit dem Gap-Intervall G überprüft. Falls der diesbezügliche Timer noch läuft, wird der Auftrag blockiert. Falls der Timer bereits abgelaufen ist, wird der Auftrag akzeptiert und die Timer für die Gap-Intervalle $G_1$ und G werden erneut gestartet. Falls ein Auftrag zu einer anderen IN-Nummer eines anderen Service beim Service Switching Point ankommt, wird dieser nur der ACG-Kontrolle mit dem Gap-Intervall G unterworfen.

Um den Verkehr bei Überlast optimal zu regeln, muß der SCP die Gap-Werte entsprechend optimal berechnen.

Aus IEEE Transactions on Communications, Vol 39, No. 4, April 1991, Seiten 574-580 und aus ISS (International Switching Symposium), Proceedings Vol. V, Seiten 159-164, 27. Mai - 1. Juni 1990 ist bereits ein Verfahren zur Berechnung der optimalen Gap-Werte bekannt. Dieses Verfahren ist jedoch nicht für mehrstufige ACG-Kontrollen konzipiert und kann dort somit nicht zur optimalen Regelung angewandt werden.

Der Erfindung liegt die Aufgabe zugrunde, ein Verfahren zur ACG-Verkehrskontrolle in einem Kommunikationsnetz anzugeben, durch das der Verkehr bei bis zu drei Kontrollstufen optimal gedrosselt bzw. entdrosselt wird.

Diese Aufgabe wird durch ein Verfahren gemäß den Merkmalen von Anspruch 1 gelöst.

Im folgenden wird ein Ausführungsbeispiel der Erfindung näher erläutert, in dessen Rahmen eine allgemeine Formel für die Verkehrsblockierungsrate im Falle von bis zu drei Kontrollstufen entwickelt und ein allgemeiner Algorithmus angegeben wird, der vom Service Control Point benutzt wird, um optimale Gap-Werte von allen aktiven ACG-Kontrollen am Ende eines jeden Regelintervalls zu berechnen. Im Anschluß daran werden drei spezielle Fälle des genannten allgemeinen Algorithmus betrachtet, bei denen eine, zwei oder drei Kontrollstufen mit jeweils einem aktiven Gap für jede Kontrollstufe vorkommen.

Zur Entwicklung der Verkehrsblockierungsrate wird davon ausgegangen, daß der Verkehr (Last) ausgeglichen ist, d.h. daß jeder Service Switching Point einem Service Control Point dieselbe Verkehrslast zukommen läßt, und daß der Ankunftsprozess der Aufträge an den Service Switching Points ein Poisson-Prozess ist.

Die folgende Notation wird für alle drei Selektionsstufen angewandt:

N:     Anzahl der Service Switching Points im Netzwerk

T:     Länge des Regelintervalls

n:     Nummer des Regelintervalls, z.B. $3^{tes}$, $10^{tes}$, etc.

Wenn wir mit $t_0$ die Aktivierungszeit einer ACG-Kontrolle bezeichnen und mit $t_n$ das Ende eines momentanen Zeitintervalls bezeichnen, dann ergibt sich der Zusammenhang $t_n = t_0 + nT$. Die Variable n wird benutzt, um das Intervall zu bezeichnen, währenddessen die ACG-Kontrolle durchgeführt wird. Als hierarchische Kontrollstufen kommen beispielsweise folgende drei Stufen in Betracht:

    1) IN-Nummer

    2) Service

    3) Global (alle Services)

Auf der Stufe der IN-Nummer kann es bis zu s Gruppen von Abweisungsintervallen (Gaps) geben, was insgesamt eine Zahl von n Gaps ergibt ($n = n_1 + n_2 + ... + n_s$), wobei s die Anzahl der Services bezeichnet (Innerhalb einer Gruppe i gibt es also $n_i$ Gaps). Auf der Stufe des Service kann es jeweils ein Abweisungsintervall pro Service geben, d.h. es kann bis zu s Abweisungsintervalle gleichzeitig geben. Schließlich kann es auf der Kontrollstufe "Global" nur ein einziges Abweisungsintervall geben.

Für die Abweisungsintervalle (Gaps) wird folgende Notation verwendet:

$g_{ij}$:     Abweisungsintervall für die Kontrolle des Verkehrstyps ij (speziellster Verkehrstyp, erste Kontrollstufe), wobei $i=1,2,...,s$ und $j=1,2,...,n_i$ (der Index i steht bspw. für einen Dienst i und der Index j steht bspw. für eine spezielle IN-Nummer, unter der der Dienst i angefordert werden kann).

$g_i$:     Abweisungsintervall für die Kontrolle des Verkehrstyps i (allgemeinerer Verkehrstyp, zweite Kontrollstufe), wobei $i=1,2,...,s$ (der Index i steht bspw. für einen Dienst i).

g:     Abweisungsintervall für die Kontrolle des gesamtem Verkehrs (allgemeinster Verkehrstyp, dritte Kontrollstufe).

Es werde nun wieder angenommen, daß der Verkehr ausgeglichen zwischen den Service Switching Points verteilt ist und jeder Service Switching Point dieselben Abweisungsintervalle anwendet. Weiterhin sei mit N die Zahl der Service Switching Points bezeichnet, mit $\lambda$ die Rate des gesamten für einen Service Control Point bestimmten Verkehrs

und mit $\lambda_{SSP}$ die Rate des an einem Service Switching Point ankommenden und für den SCP bestimmten Verkehrs. Dann ergibt sich die Beziehung $\lambda_{SSP} = \lambda/N$.

Der Eingangs/-Ausgangsverkehr kann dann wie folgt bezeichnet werden:

$\lambda_{ij}$:    Verkehr des Verkehrstyps ij (Untermenge des Verkehrstyps i), der zuerst dem Abweisungsintervall $g_{ij}$, dann dem Abweisungsintervall $g_i$ und schließlich dem Abweisungsintervall g unterworfen wird.

$\lambda'_{ij}$:    Verkehr des Verkehrstyps ij, der den genannten Abweisungsintervallen unterworfen wird und diese passiert, d.h. der den Service Control Point erreicht.

$\lambda_{i0}$:    Der Rest des unter Verkehrstyp i fallenden Verkehrs, der keiner Überlast-Kontrolle der ersten Kontrollstufe (Abweisungsintervall $g_{ij}$) unterworfen wird, der jedoch den Kontrollen der zweiten und dritten Kontrollstufe, d.h. den Abweisungsintervallen $g_i$ und g unterworfen wird.

$\lambda'_{i0}$:    Der entsprechende Verkehr, der die Kontrollen der zweiten und dritten Stufe erfolgreich passiert, d.h. der Verkehr, der den SCP erreicht.

$\lambda_0$:    Der Rest des Überlast-kontrollierten Verkehrs all derjeniger Dienste, die keinen Kontrollen der ersten und zweiten Stufe unterworfen werden, jedoch der Kontrolle der dritten Kontrollstufe, d.h. der globalen Stufe.

$\lambda'_0$:    Der zu $\lambda_0$ korrespondierende Verkehr, der die Kontrolle der dritten Stufe erfolgreich passiert.

Mit Hilfe der genannten Notation läßt sich der gesamte an den Service Switching Points ankommende und für den SCP bestimmte Verkehr für einen Service i durch Gleichung (1) wiedergeben:

$$\lambda_i = \lambda_{i1} + \lambda_{i2} + \ldots + \lambda_{in_i} + \lambda_{i0} = \sum_{j=0}^{n_i} \lambda_{ij} \quad (i=1,\ldots,s) \tag{1}$$

Desweiteren läßt sich der gesamte Überlast-kontrollierte Verkehr durch Gleichung (2) wie folgt wiedergeben:

$$\lambda = \sum_{i=1}^{s} \sum_{j=0}^{n_i} \lambda_{ij} + \lambda_0 = \sum_{i=0}^{s} \lambda_i \tag{2}$$

In entsprechender Weise läßt sich der einem Service Control Point angebotene Verkehr, d.h. der Verkehr, der die Kontrollstufen in den SSPs passiert, durch Gleichung (3) und (4) wie folgt beschreiben:

$$\lambda'_i = \lambda'_{i1} + \lambda'_{i2} + \ldots + \lambda'_{in_i} + \lambda'_{i0} = \sum_{j=0}^{n_i} \lambda'_{ij} \quad (i=1,\ldots,s) \tag{3}$$

$$\lambda' = \sum_{i=1}^{s} \sum_{j=0}^{n_i} \lambda'_{ij} + \lambda'_0 = \sum_{i=0}^{s} \lambda'_i \tag{4}$$

Die zu einem Service Control Point korrespondierende Kapazität läßt sich auf analoge Weise durch die folgenden Gleichungen (5) und (6) beschreiben:

$$C_i = C_{i1} + C_{i2} + \ldots + C_{in_i} C_{i0} = \sum_{j=0}^{n_i} C_{ij} \quad (i=1,\ldots,s) \tag{5}$$

$$C = \sum_{i=1}^{s} \sum_{j=0}^{n_i} C_{ij} + C_0 = \sum_{i=0}^{s} C_i \tag{6}$$

Wobei $C_{ij}$ die Kapazität eines Service Control Points für den i-ten Dienst, der zuerst dem Abweisungsintervall $g_{ij}$, dann dem Abweisungsintervall $g_i$ und schließlich dem Abweisungsintervall g unterworfen wird.

Die Kapazitäten $C_{ij}$ können entweder konstant sein oder nach jedem Regelintervall bestimmt werden, d.h. sie können vom Call-Mix und von der durchschnittlichen Call Processingzeit an einen Service Control Point abhängen, die sich mit der Zeit ändert.

Im folgenden wird mit Prob(x) die Wahrscheinlichkeit bezeichnet, daß innerhalb eines Abweisungsintervalls x ein Auftrag an einem Service Switching Point ankommt. Dann gelten folgende Gleichungen (7), (8) und (9), wobei $i=1,...,s; j=1,...,n_i$:

$$\text{Prob}(g) = \frac{\lambda'}{N} g \equiv P \tag{7}$$

$$\text{Prob}(g_i) = \frac{\lambda'_i}{N} g_i \equiv P_i \tag{8}$$

$$\text{Prob}(g_j) = \frac{\lambda'_{ij}}{N} g_{ij} \equiv P_{ij} \tag{9}$$

In Gleichung (7) wird mit $\lambda'/N$ der Verkehr bezeichnet, der in einem Service Switching Point die dem Gapintervall g entsprechende Kontrollstufe passiert ($\lambda/N$ war das entsprechende Angebot im SSP). Zu jedem Gapintervall der Kontrollstufe g, das innerhalb eines (sehr langen) Beobachtungsintervalls gestartet wurde, gibt es genau einen durchgelassenen Auftrag. Wenn beispielsweise $\lambda'/N=10$/Sek. gilt und g=30ms gilt, so ist der Timer der Kontrollstufe g im Mittel pro Sek. 10*30ms=300ms lang aktiv. Die restliche Zeit, also 700ms, ist er nicht aktiv. Die Wahrscheinlichkeit, auf einen aktiven Timer der Kontrollstufe g zu stoßen, ist dann also $P=0,7=\lambda'/N*g$.

Das Gesagte gilt für die Gleichungen (8) und (9) in analoger Weise.

Die Rate der blockierten oder abgewiesenen Aufträge für jeden Teil des Überlast-kontrollierten Verkehrs kann desweiteren durch folgende Gleichungen (10), (11) und (12) angegeben werden:

$$\frac{\lambda_0 - \lambda'_0}{N} = \frac{\lambda_0}{N} P \qquad \text{(abgewiesen durch g)} \tag{10}$$

$$\frac{\lambda_{i0} - \lambda'_{i0}}{N} = \frac{\lambda_{i0}}{N}[P_i + (1-P_i)P] \qquad \text{(abgewiesen durch } g_i \text{ oder g)} \tag{11}$$

$$\frac{\lambda_{ij} - \lambda'_{ij}}{N} = \frac{\lambda_{ij}}{N}[P_{ij} + (1-P_{ij})P_i + (1-P_{ij})(1-P_i)P] \qquad \text{(abgewiesen durch } g_{ij}, g_i, \text{ oder g)} \tag{12}$$

Gleichung (10) ist exakt, während die Gleichungen (11), (12) nur angenähert gelten, da die Abweisungsintervalle g und $g_i$ nicht unabhängig voneinander laufen, d.h. die dazu korrespondierenden stochastischen Prozesse sind nicht unabhängig voneinander. Zu bemerken ist, daß die Ausdrücke in den Gleichungen (11) bzw. (12) symmetrisch bezüglich der Wahrscheinlichkeiten P und $P_i$ bzw. P, $P_i$ und $P_{ij}$ sind, woraus sich schließen läßt, daß die Reihenfolge des Überprüfens der aktiven Abweisungsintervalle auf die Funktionsweise des Algorithmus keinen Einfluß hat.

Durch Einsetzen der Gleichungen (7) bis (9) in die Gleichungen (10) bis (12) ergeben sich folgende Gleichungen (13), (14) und (15):

$$\frac{\lambda_0 - \lambda'_0}{N} = \frac{\lambda_0}{N} \frac{\lambda'}{N} g \tag{13}$$

$$\frac{\lambda_{i0} - \lambda'_{i0}}{N} = \frac{\lambda_{i0}}{N}\left[\frac{\lambda'_i}{N} g_i + (1 - \frac{\lambda'_i}{N} g_i)\frac{\lambda'}{N} g\right] \tag{14}$$

$$\frac{\lambda_{ij} - \lambda'_{ij}}{N} = \frac{\lambda_{ij}}{N}\left[\frac{\lambda'_{ij}}{N} g_{ij} + (1 - \frac{\lambda'_{ij}}{N} g_{ij})\frac{\lambda'_i}{N} g_i + (1 - \frac{\lambda'_{ij}}{N} g_{ij})(1 - \frac{\lambda'_i}{N} g_i)\frac{\lambda'}{N} g\right] \tag{15}$$

Der (gesamte) mittlere Eingangsverkehr an allen Service Switching Points läßt sich somit durch folgende Gleichungen (16) bis (18) beschreiben:

$$\lambda_0 = \frac{N\lambda'_0}{N - \lambda'g} \tag{16}$$

$$\lambda_{i0} = \frac{N^2\lambda'_{i0}}{(N - \lambda'_i g_i)(N - \lambda'g)} \tag{17}$$

$$\lambda_{ij} = \frac{N^3\lambda'_{ij}}{(N - \lambda'_{ij} g_{ij})(N - \lambda'_i g_i)(N - \lambda'g)} \tag{18}$$

Unter der Annahme, daß die so bestimmten Eingangsströme auch im nächsten Regelintervall noch anhalten, ergeben sich somit die Werte für die Abweisungsintervalle wie folgt:

$$g^{(new)} = N\left[\frac{1}{C} - \frac{C_0}{\lambda_0 C}\right] \tag{19}$$

$$g_i^{(new)} = N\left[\frac{1}{C_i} - \frac{NC_{i0}}{\lambda_{i0} C_i (N - Cg^{(new)})}\right] \tag{20}$$

$$g_{ij}^{(new)} = N\left[\frac{1}{C_{ij}} - \frac{N^2}{\lambda_{ij}(N - C_i g_i^{(new)})(N - Cg^{(new)})}\right] \tag{21}$$

Oder anders ausgedrückt durch das folgende Gleichungssystem (22):

$$g^{(new)} = \frac{\lambda' C_0}{\lambda'_0 C} g^{(old)} + \frac{N}{C}\left[1 - \frac{C_0}{\lambda'_0}\right] \tag{22}$$

$$g_i^{(new)} = \frac{\lambda'_i \lambda'_0 C_{i0}}{\lambda'_{i0} C_i C_0} g_i^{(old)} + \frac{N}{C_i}\left[1 - \frac{\lambda'_0 C_{i0}}{\lambda'_{i0} C_0}\right]$$

$$g_{ij}^{(new)} = \frac{\lambda'_{i0}}{C_{i0}} g_{ij}^{(old)} + \frac{N}{C_{ij}}\left[1 - \frac{\lambda'_{i0} C_{ij}}{\lambda'_{ij} C_{i0}}\right]$$

Das Gleichungssystem (22) gibt die Werte der Abweisungsintervalle für das Zeitintervall n+1, d.h. das "neue" Zeitintervall, als eine Funktion der Abweisungsintervalle des vorherigen Zeitintervalls n ("altes" Zeitintervall) und der Verkehrslast an, die während dieses Zeitintervalls (Regelintervall) akzeptiert und somit zum Service Control Point weitergeleitet wurde.

Falls ein (oder mehrere) Ergebnisse der Zuweisungen in (22) negativ ausfallen sollten, so deutet dies auf das Enden der Überlastsituation bezüglich des entsprechenden Verkehrstyps hin. In diesen Fällen ist der entsprechende Gapwert auf Null zu setzen. Für alle diesem Verkehrstyp zugehörigen Aufträge reduziert sich dann die Anzahl der anzuwendenden Gaps.

Im folgenden werden drei spezielle Fälle näher betrachtet, wobei für jeden der betrachteten Levels nur ein Gap aktiv sein soll. Für komplexere Fälle, d.h. wenn beispielsweise mehrere Services individuell kontrolliert und/oder mehr als eine IN-Nummer-Kontrolle innerhalb des Services bzw. der Services aktiv sind, müssen die vorhergenannten allgemeinen Formeln angewendet werden.

Zunächst wird der einfachste Fall von nur einer Hierarchiestufe näher erläutert. Dieser Fall bezieht sich auf einen Verkehrsstrom, der nur einer ACG-Kontrolle eines bestimmten Typs unterworfen ist (andere ACG-Kontrollen können auch bestehen, werden jedoch auf andere Call-Typen angewendet. Beispielsweise kann mehr als eine IN-Nummer oder IN-Service unter einer ACG-Kontrolle zur selben Zeit stehen, und dennoch wird jeder Auftrag nur einer einzigen ACG-Kontrolle unterzogen. In diesem Fall kann der weiter unten beschriebene Algorithmus so oft wie nötig angewendet werden und zwar für jeden unabhängigen Verkehrstyp jeweils einmal). Da es im nun beschriebenen Fall keine weitere Selektion von Verkehrs-Unterströmen gibt, muß in diesem Fall ein Gap g betrachtet werden und die weiter unten angegebenen Beziehungen können aus dem Gleichungssystem (22) für die globale Abweisungsstufe erhalten werden, indem $C_0=C$, $\lambda_0=\lambda$ und $\lambda'_0=\lambda'$ gesetzt wird.

Zunächst wird $\lambda(t_n)$ berechnet, indem $\lambda'(t_n)$ und $g(t_n)$ verwendet wird:

$$\lambda=\frac{N\lambda'}{N-\lambda'g} \qquad (23)$$

Sodann wird g(new) berechnet, indem $C(t_n)$ und $\lambda(t_n)$ verwendet wird:

$$g^{(new)}=N\left[\frac{1}{C}-\frac{1}{\lambda}\right] \qquad (24)$$

Oder in einem Berechnungsschritt

$$g^{(new)}=g^{(old)}+\frac{N}{C}\left[1-\frac{C}{\lambda'}\right] \qquad (25)$$

Aus Gleichung (25) ergibt sich, daß der Gap unverändert bleibt, d.h. $g^{(new)}=g^{(old)}$, wenn der mittlere Gap-Durchsatz $\lambda$ während des letzten Intervalls dem Kapazitätswert entsprach.

Im folgenden wird ein Spezialfall des Gleichungssystems (22) betrachtet, der den Fall von zwei gleichzeitigen ACG-Kontrollen für denselben Call-Typ betrifft. Ein solcher Fall liegt vor, wenn ein Verkehrsunterstrom zusätzlich kontrolliert werden muß, ohne daß dabei der Rest des Verkehrs beeinflußt wird, der auf einer allgemeineren Basis kontrolliert wird.

Beispielsweise kann der Verkehr zu einer IN-Nummer gesondert kontrolliert werden, ohne daß dadurch der Rest der Aufträge zu demselben Service, zu dem die IN-Nummer gehört, beeinflußt wird. Auf einer allgemeineren servicebezogenen ACG-Kontrolle werden sowohl dieser restliche Verkehr als auch der für die spezielle IN-Nummer bestimmte Vekehr kontrolliert. Nur solche Aufträge, die zu der genannten IN-Nummer gehören, werden beiden ACG-Kontrollen unterworfen. Die Reihenfolge, nach der die beiden genannten Kontrollen am Service Switching Point angewendet werden, ist wie bereits erwähnt irrelevant. Die im folgenden beschriebene Anwendungsreihenfolge ist als lediglich beispielhaft zu verstehen.

Angenommen, das Abweisungsintervall g ist dasjenige Abweisungsintervall, das auf den gesamten Verkehr angewendet wird, z.B. auf einen Service (oder eine Gruppe von Services), und das Abweisungsintervall $g_1$ ist dasjenige Abweisungsintervall, das zusätzlich für einen bestimmten Teil des Gesamtverkehrs angewendet wird, z.B. auf eine IN-Nummer (oder einen Service). Wenn nun ein Auftrag zu einer IN-Nummer an einem Service Switching Point ankommt, wird zuerst das Abweisungsintervall $g_1$ überprüft. Falls der zu diesem Abweisungsintervall gehörige Timer noch läuft, wird der Auftrag abgewiesen. Falls der Timer bereits abgelaufen ist, wird das Abweisungsintervall g überprüft. Falls der zu dem Abweisungsintervall g gehörige Timer noch läuft, wird der Auftrag ebenfalls abgewiesen. Im anderen Fall wird der Auftrag angenommen und die Timer zu den Abweisungsintervallen g und $g_1$ werden erneut gestartet.

Im Unterschied zum vorher genannten Fall wird ein Auftrag zu demselben Service, jedoch zu einer anderen IN-Nummer dieses Services, nur dem Abweisungsintervall g unterworfen. Aufträge zu anderen Services werden in dem hier beschriebenen Beispiel nicht kontrolliert. Zu beachten ist, daß Aufträge zu der genannten IN-Nummer entweder durch das noch nicht abgelaufene Abweisungsintervall $g_1$ blockiert werden können, das durch einen vorhergehenden Auftrag zu derselben Nummer ausgelöst wurde, oder durch das Abweisungsintervall g blockiert werden können, das durch einen vorhergehenden Auftrag zu einer anderen Nummer des Services gestartet wurde.

Das folgende Gleichungssystem (26) beschreibt für den oben genannten Zwei-Stufen-Fall die Berechnung der Gap-Werte:

$$g^{(new)}=\frac{\lambda'C_0}{\lambda'_0C}g^{(old)}+\frac{N}{C}\left[1-\frac{C_0}{\lambda'_0}\right] \qquad (26)$$

$$g_1^{(new)}=\frac{\lambda'_0}{C_0}g_1^{(old)}+\frac{N}{C_1}\left[1-\frac{\lambda'_0C_1}{\lambda'_1C_0}\right]$$

wobei $\lambda'=\lambda'_0+\lambda'_1$ und $C=C_0+C_1$. Wie beim vorher genannten Ein-Stufen-Fall bleiben auch im Zwei-Stufen-Fall die Gap-Werte bei Anwendung des Gleichungssystems (26) unverändert, wenn der Gap-Durchsatz und die entsprechenden Kapazitätswerte gleich groß sind.

Im folgenden wird ein Beispiel des Drei-Kontrollstufen-Falles näher erläutert. Bei dem Beispiel sei angenommen, daß das Abweisungsintervall g auf den gesamten Verkehr, z.B. auf eine Gruppe von Services, angewendet wird, daß des weiteren das Abweisungsintervall $g_1$ auf einen Teil des Verkehrs des Abweisungsintervalls g, z.B. auf einen Service, angewendet wird, und daß das Abweisungsintervall $g_{11}$ auf einen Teil des Verkehrs des Abweisungsintervalls $g_1$ angewendet wird, z.B. auf eine IN-Nummer. Es wird noch einmal darauf hingewiesen, daß auch hier die im folgenden dargestellte Anwendungsreihenfolge nur beispielhaft ist und jede andere Reihenfolge ebenso möglich ist.

Wenn nun ein Auftrag zu einer IN-Nummer an einem Service Switching Point ankommt, wird zuerst das Abweisungsintervall $g_{11}$ überprüft. Falls der Timer dieses Abweisungsintervalls noch läuft, wird der Auftrag zurückgewiesen, während im anderen Fall das Abweisungsintervall $g_1$ überprüft wird. Falls der Timer des Abweisungsintervalls $g_1$ noch läuft, wird der Auftrag abgewiesen. Falls dieser Timer jedoch bereits abgelaufen ist, wird das Abweisungsintervall g überprüft. Wenn der Timer des Abweisungsintervalls g noch läuft, wird der Auftrag blockiert, während im anderen Fall der Auftrag angenommen wird und die Timer für die Abweisungsintervalls $g_{11}$, $g_1$ und g erneut gestartet werden.

Wenn ein Auftrag zu einer anderen IN-Nummer, aber zu demselben Service, an einem Service Switching Point ankommt, wird zuerst das Abweisungsintervall $g_1$ überprüft. Falls dessen Timer noch läuft, wird der Auftrag abgewiesen, während im anderen Fall das Abweisungsintervall g überprüft wird. Falls der Timer dieses Abweisungsintervalls noch läuft, wird der Auftrag zurückgewiesen, während im anderen Fall der Auftrag akzeptiert wird und die Timer der Abweisungsintervalle $g_1$ und g erneut gestartet werden.

Falls schließlich ein Auftrag zu einem anderen Service, jedoch zu derselben Gruppe von Services, auf die das Abweisungsintervall g angewendet wird, an einem Service Switching Point ankommt, wird nur das Abweisungsintervall g überprüft. Falls der dazugehörige Timer abgelaufen ist und der Auftrag somit akzeptiert wird, wird nur das Abweisungsintervall g erneut gestartet. Aufträge zu anderen Services werden nicht überprüft.

Um den geschilderten Fall mit Hilfe des Gleichungssystems (22) zu beschreiben, wird im folgenden mit $\lambda_{11}$ und $\lambda'_{11}$ die Call-Ankunftsrate an den Service Switching Points und dem Service Control Point bezüglich des Verkehrs, der den Abweisungsintervallen $g_{11}$, $g_1$ und g unterworfen ist, bezeichnet. Des weiteren wird mit $\lambda_{10}$ und $\lambda'_{10}$ die Call-Ankunftsrate an den Service Switching Points und dem Service Control Point bezüglich des $g_1$ und g unterworfenen Verkehrs bezeichnet und mit $\lambda_0$ und $\lambda'_0$ die Call-Ankunftsrate an den Service Switching Points und dem Service Control Point bezüglich des nur g unterworfenen Verkehrs. Für das n-te gerade abgelaufene Regelintervall ist die Summe $\lambda_{11}+\lambda_{10}$ gleich dem gesamten Verkehr, der den Abweisungsintervallen $g_1$ und g unterworfen ist, und die Summe $\lambda_{11}+\lambda_{10}+\lambda_0$ ist gleich dem gesamten Verkehr, der dem Abweisungsintervall g unterworfen ist.

Die Aufdatierungsgleichungen ergeben somit das folgende Gleichungssystem (27):

$$g^{(new)}=\frac{\lambda'C_0}{\lambda'_0 C}g^{(old)}+\frac{N}{C}\left[1-\frac{C_0}{\lambda'_0}\right] \tag{27}$$

$$g_1^{(new)}=\frac{\lambda'_1\lambda'_0 C_{10}}{\lambda'_{10}C_1 C_0}g_1^{(old)}+\frac{N}{C_1}\left[1-\frac{\lambda'_0 C_{10}}{\lambda'_{10}C_0}\right]$$

$$g_{11}^{(new)}=\frac{\lambda'_{10}}{C_{10}}g_{11}^{(old)}+\frac{N}{C_{11}}\left[1-\frac{\lambda'_{10}C_{11}}{\lambda'_{11}C_{10}}\right]$$

wobei $\lambda'_1=\lambda'_{10}+\lambda'_{11}$, $\lambda'=\lambda'_0+\lambda'_1$, $C_1=C_{10}+C_{11}$, $C=C_0+C_1$.

Bezüglich der Aktivierung und/oder Deaktivierung von ACG-Kontrollen gibt es mehrere Implementierungsvarianten. Obwohl ein positiver Gap-Wert ebenfalls Überlast anzeigt, ist es nicht sicher, Entscheidungen über die Aktivierung und/oder Deaktivierung von ACG-Kontrollen alleine vom Gap-Wert abhängig zu machen. Dies trifft insbesondere für die erste Aktivierung einer ACG-Kontrolle zu, da das alleinige Abhängigmachen vom Gap-Wert zu einer übereilten Aktivierung bei kurzzeitigen Verkehrsspitzen oder zu frühzeitiger Deaktivierung bei kurzen Verkehrstälern führen könnte. Auf der anderen Seite könnte das Warten bis zum nächsten Regelintervall zu lange sein, da die Gap-Werte nur periodisch berechnet werden. Andere Parameter wie beispielsweise die Eingangswarteschlange des Service Control Points oder die mittlere Wartezeit für die Bearbeitung der Aufträge sollten also zusätzlich zur ACG-Kontrolle zur Entscheidung über die Deaktivierung oder Aktivierung der ACG-Kontrolle herangezogen werden.

Wenn eine ACG-Kontrolle einmal aktiviert worden ist, wird der dazugehörige Gap-Wert am Ende eines jeden Regelintervalls aktualisiert. Zu diesem Zeitpunkt kann der Service Control Point auch zusätzliche ACG-Kontrollen gemäß dem angegebenen Gleichungssystem (22) aktivieren. Dadurch haben alle aktiven ACG-Kontrollen dasselbe Regelintervall.

**Patentansprüche**

1. Verfahren zur Überlastkontrolle in einem Kommunikationsnetz, das mindestens einen zentralen Knoten(SCP) und mindestens einen peripheren Knoten (SSP) aufweist, wobei ein Teil der über die peripheren Knoten an das Netz herangetragenen Aufträge nur von einem zentralen Knoten (SCP) bearbeitet werden kann, demgemäß

   a) von einem zentralen Knoten (SCP) ständig die an ihn von peripheren Knoten(SSP) herangetragene Belastung verkehrstypindividuell ermittelt wird,
   b) von einem zentralen Knoten (SCP) Überlastkontrollnachrichten zu den peripheren Knoten (SSP) des Netzes gesandt werden, die jeweils den Verkehrstyp angeben, der einer Überlastkontrolle unterzogen werden soll und außerdem einen dazugehörigen Timerwert(Gap-Wert) enthalten, der die Zeitlänge vorgibt, über die Aufträge, die unter diesen Verkehrstyp fallen, von einem peripheren Knoten (SSP) abgewiesen werden sollen, bis erneut ein Auftrag dieses Verkehrstyps akzeptiert werden soll,
   c) die Überlastkontrolle von den peripheren Knoten (SSP) auf abgestufte Weise durchgeführt wird, indem auf einen ankommenden Auftrag eine bis zu dreistufige Überlastkontrolle angewandt wird,

   **dadurch gekennzeichnet,**
   daß von einem zentralen Knoten (SCP) die Timerwerte $(g, g_i, g_{ij})$ für die je Auftrag bis zu dreistufige Überlastkontrolle wie folgt berechnet werden:

$$g^{(new)} = \frac{\lambda' C_0}{\lambda'_0 C} g^{(old)} + \frac{N}{C}\left[1 - \frac{C_0}{\lambda'_0}\right] \tag{22}$$

$$g_i^{(new)} = \frac{\lambda'_i \lambda'_0 C_{i0}}{\lambda'_{i0} C_i C_0} g_i^{(old)} + \frac{N}{C_i}\left[1 - \frac{\lambda'_0 C_{i0}}{\lambda'_{i0} C_0}\right]$$

$$g_{ij}^{(new)} = \frac{\lambda'_{i0}}{C_{i0}} g_{ij}^{(old)} + \frac{N}{C_{ij}}\left[1 - \frac{\lambda'_{i0} C_{ij}}{\lambda'_{ij} C_{i0}}\right]$$

   wobei

   $g_{ij}$:     Abweisungsintervall für die Kontrolle des Verkehrstyps ij (Kontrollstufe des speziellsten Verkehrstyps), wobei i=1,2,...,s und j=1,2,...,$n_i$ (der Index i kann bspw. im Falle eines Intelligenten Netzes für einen Dienst i und der Index j für eine spezielle IN-Nummer, unter der der Dienst i angefordert werden kann, stehen),

   $g_i$:     Abweisungsintervall für die Kontrolle des Verkehrstyps i (Kontrollstufe des allgemeineren Verkehrstyps), wobei i=1,2,...,s (der Index i kann bspw. im Falle eines Intelligenten Netzes für einen Dienst i stehen),

   $g$:     Abweisungsintervall für die Kontrolle des gesamtem Verkehrs(Kontrollstufe des allgemeinsten Verkehrstyps),

   $\lambda'_{ij}$:     Verkehr des Verkehrstyps ij (Untermenge des Verkehrstyps i), der dem Abweisungsintervall $g_{ij}$, dem Abweisungsintervall $g_i$ und dem Abweisungsintervall g (in dieser oder einer beliebig anderen Reihenfolge) unterworfen wird, und der diese passiert, d.h. der den zentralen Knoten (SCP) erreicht,

   $\lambda'_{i0}$:     Der Rest des unter Verkehrstyp i fallenden Verkehrs, der keiner Überlast-Kontrolle der Kontrollstufe des speziellsten Verkehrstyps (Abweisungsintervall $g_{ij}$) unterworfen wird, der jedoch den Kontrollstufen des allgemeineren und allgemeinsten Verkehrstyps, d.h. den Abweisungsintervallen $g_i$ und g unterworfen wird, und der diese Kontrollstufen erfolgreich passiert, d.h. der Verkehr, der den zentralen Knoten (SCP) erreicht,

   $\lambda'_i$:     Gesamter Verkehr des Verkehrstyps i,

$\lambda'_0$:      Der Rest des Überlast-kontrollierten Verkehrs, der den Kontrollstufen des speziellsten und allgemeineren Verkehrstyps nicht unterworfen wird, jedoch der allgemeinsten Kontrollstufe, und der die Kontrollstufe des allgemeinsten Verkehrstyps erfolgreich passiert,

$C_{ij}$:      Kapazität für den Verkehr des Verkehrstyps ij,

$C_{i0}$:      Kapazität für den Rest des unter Verkehrstyp i fallenden Verkehrs, der der Kontrollstufe des speziellsten Verkehrstyps (Abweisungsintervall $g_{ij}$) nicht unterworfen wird, der jedoch den Kontrollstufen des allgemeineren und allgemeinsten Verkehrstyps, d.h. den Abweisungsintervallen $g_i$ und g unterworfen wird,

$C_i$ :      Kapazität für den gesamten Verkehr des Verkehrstyps i,

$C_0$ :      Kapazität für den Rest des überlastkontrollierten Verkehrs, der den Kontrollstufen des speziellsten und allgemeineren Verkehrstyps nicht unterworfen wird, jedoch der Kontrollstufe des allgemeinsten Verkehrstyps, d.h. der globalen Stufe, und der die Kontrollstufe des allgemeinsten Verkehrstyps erfolgreich passiert,

C :      Kapazität für den gesamten überlastkontrollierten Verkehr

N :      Gesamtzahl der peripheren Knoten.